(19) Europäisches Patentamt
European Patent Office
Office européen des brevets

(11) **EP 1 433 707 A2**

(12) **EUROPEAN PATENT APPLICATION**

(43) Date of publication:
**30.06.2004 Bulletin 2004/27**

(51) Int Cl.⁷: $B65B\ 51/30$, $B31B\ 19/64$, $B31B\ 1/20$, $B31B\ 1/64$

(21) Application number: **03029373.2**

(22) Date of filing: **19.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.12.2002 IT MI20022759**

(71) Applicant: **De Bernardi, Alessandro**
**20020 Bienate (Milano) (IT)**

(72) Inventor: **De Bernardi, Alessandro**
**20020 Bienate (Milano) (IT)**

(74) Representative: **Lunati, Vittoriano**
**LUNATI & MAZZONI S.a.s.**
**Via Carlo Pisacane, 36**
**20129 Milano (IT)**

(54) **A device and process for operating on a moving laminar material, in particular for a bag-making machine**

(57) For operating on a laminar material (3) having a reference speed $V_R$, it is provided a device comprising: a rotating body (6) with a rotation speed $\omega$, a guide member (5) in engagement with the rotating body (6) and movable along a circumferential trajectory (7) having a work stretch (7a), the guide member (5) in the circumferential trajectory (7) having a tangential speed T with a work component $T_L$ parallel to the laminar material (3), and drive means (9) adapted to selectively vary the tangential speed T of the guide member (5) and the reference speed $V_R$ of the laminar material (3) so as to impose a work component $T_L$ and a reference speed $V_R$ equal to each other at the work stretch (7a).

Fig.1

**Description**

The invention relates to a device and a process for operating on a moving laminar material, in particular for a bag-making machine, as pointed out in the preamble of Claim 1.

The bag-making machine is of the type having at least one work unit adapted to heat-seal, cut or mold laminar material such as a ribbon or film of plastic material, and having actuating members adapted to make the laminar material move forward at the work unit.

It is known that in machines operating on a material moving through several different work stations, it is important that the operating modalities should be set in such a manner that they do not require the temporary stopping of the material and the intermittent movement of same. This for the purpose of increasing the production rate to an important degree by eliminating down times for interruptions as well as the problems connected with slowing and restarting that are inevitably entailed by an intermittent movement.

In particular in bag-making machines the required production rate is to be as high as possible to reduce costs.

A high production rate then allows all bags of a given type to be made with a single machine. In fact bags differentiate from each other as regards their structure, shape, sizes, thickness, transparency; color, holes, surface finish, printed elements, accessory elements, etc. and in the presence of all these variations it is advantageous that the various operations for production setting-up should be made on a single machine.

A continuous operation in the bag-making machines is also suitable because these machines carry out heat-sealing operations on the laminar material which are subjected to accidental tears in the presence of the strong accelerations imposed by an intermittent movement.

Even when tears are avoided, tensioning due to accelerations imposed by an intermittent movement easily causes permanent sets on the laminar material and the bags at the heat-sealed regions where the high temperature applied lasts for some instants.

In spite of the stated importance of a continuous working, a characteristic of the bag-making machines is exactly that of operating with an intermittent advancing of the material being processed.

In fact different working operations, in particular heat-sealing, require a relatively prolonged contact time with the plastic material.

Therefore a technical solution is generally adopted in which the laminar material is caused to move forward in an intermittent manner and in which the work units intervene during the interruption moments.

However, bag-making machines have already been studied in which the members operating on the laminar material being processed are movable along a trajectory adjacent to the material itself.

The work members may be translated along appropriate guides at least partly parallel to the material being processed, so as to maintain a relatively prolonged contact therewith, then the movement direction of the work members is reversed for return to the starting position, for a new operation.

This technical solution gives rise to high mechanical stresses at the moving members so that oscillations and work inaccuracies can be created, which is very unpleasant because every occasional malfunction leads to rejection of a great number of articles and/or interruptions for machine resetting.

Therefore a very precise and expensive construction is required also involving use of special materials to reduce weights and occurrence of forces of inertia and vibrations.

Under this situation the technical task underlying the invention is to conceive a device and a process capable of obviating said drawbacks of the prior art, and capable of carrying out an efficient continuous working which is reliable and of reduced costs even in the presence of members operating on the material being processed that have important sizes and masses.

The technical task mentioned is achieved by a device for operating on moving laminar material, in particular for a bag-making machine, as claimed in Claim 1. Preferred embodiments are set out in the sub-claims.

The features and advantages of the invention will be more apparent from the following detailed description of preferred embodiments of the invention, with reference to the accompanying drawings, in which:

-    **Fig. 1** is a diagrammatic perspective view of the device in accordance with the invention made active on two opposite work units;
-    **Fig. 2** is a diagrammatic perspective view of the device in accordance with the invention made active on a single work unit;
-    **Fig. 3** shows the device at support means for work units equipped with a carriage and column-shaped posts movable in a direction both perpendicular and parallel to the laminar material;
-    **Fig. 4** is similar to the preceding figure and uses column-shaped posts only movable in a direction parallel to the laminar material;
-    **Fig. 5** highlights the device simultaneously active on many work units disposed in side by side relationship;
-    **Fig. 6a** shows the device active on two opposite work units in mutual approaching and supported by spring compensation members;
-    **Figs. 6b, 6c, 6d** are similar to Fig. 6a and show starting, intermediate and final contact positions respectively of the work units, emphasizing the action of the spring compensation members;
-    **Fig. 7a** shows how the work component $T_L$ of the tangential speed T varies in a body rotating at a constant rotation speed $\omega$;

- **Fig. 7b** further shows through Cartesian coordinates, how the value of the work component $T_L$ varies in the case shown in Fig. 7a;
- **Fig. 8** shows how the tangential speed T varies in a rotating body having a variable rotation speed $\omega$;
- **Fig. 9** shows through Cartesian coordinates, how the rotation speed $\omega$ varies in the case shown in the preceding Fig. 8;
- **Fig. 10** shows an embodiment of the drive means of the device;
- **Fig. 11a** shows a further embodiment of the drive means and emphasizes a shaped pulley in a first operating position;
- **Fig. 11b** is similar to the preceding figure and shows the shaped pulley in a second operating position;
- **Fig. 12** is a front view of the profile of the shaped pulley;

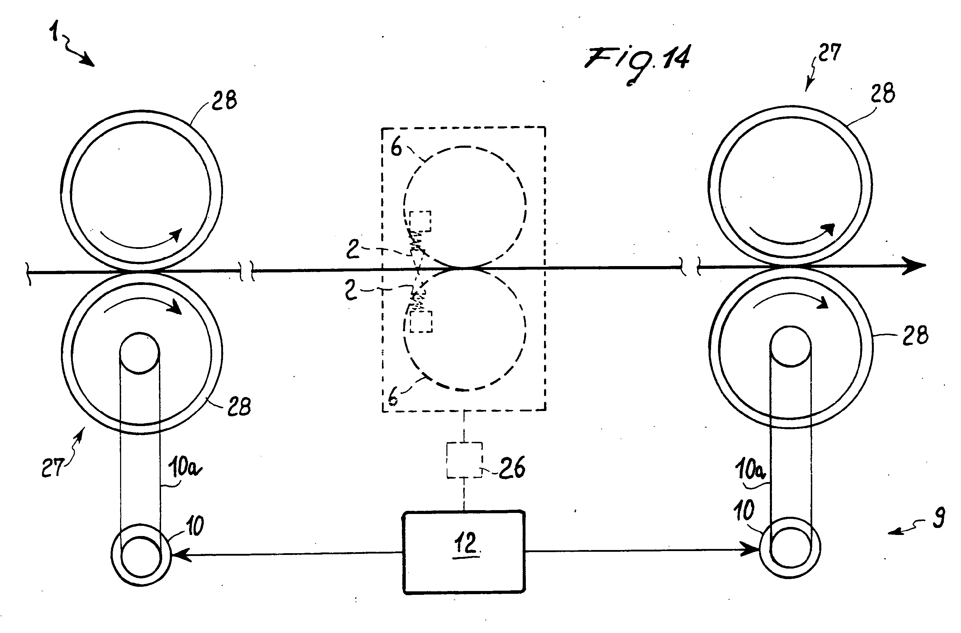

- **Fig. 13** is a plan view of the shaped pulley; and
- **Fig. 14** shows the actuating members of the laminar material and a further embodiment of the device in accordance with the invention.

With reference to the drawings, the device **1** in accordance with the invention is provided to operate on a moving laminar material and is particularly applied to a machine to make bags of plastic material.

Device **1** is placed close to at least one work unit **2**, defined by a welding bar for example, and said laminar material denoted at **3** consists for example of a ribbon of plastic material having several superposed layers that are locally welded and/or cut and/or folded.

The laminar material 3 is moved forward at the work unit 2 with a substantially flat lying arrangement defining a reference plane.

Moving forward is obtained by actuating members comprising opposite and powered calenders for example, that in a manner known by itself clamp and drag along the laminar material. A particular embodiment of said actuating members is shown in Fig. 14.

The movement or sliding speed of the laminar material 3 is herein defined as reference speed and is identified with $\mathbf{V_R}$.

A single work unit 2 may be present or two or more work units 2 may be provided, that are opposite to each other in pairs and simultaneously operate in a synergistic manner with each other to simultaneously intervene on the two opposite faces of the laminar material 3.

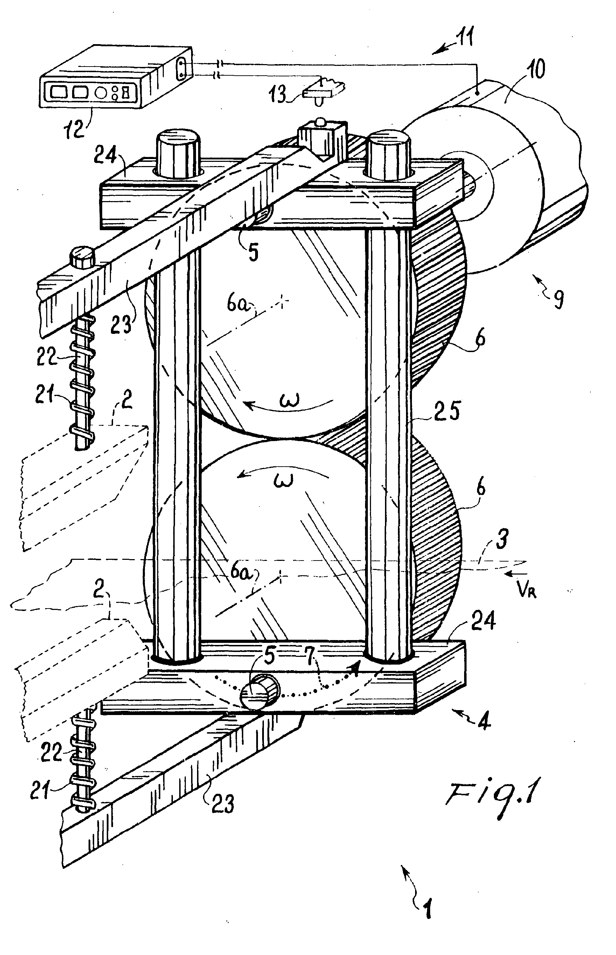

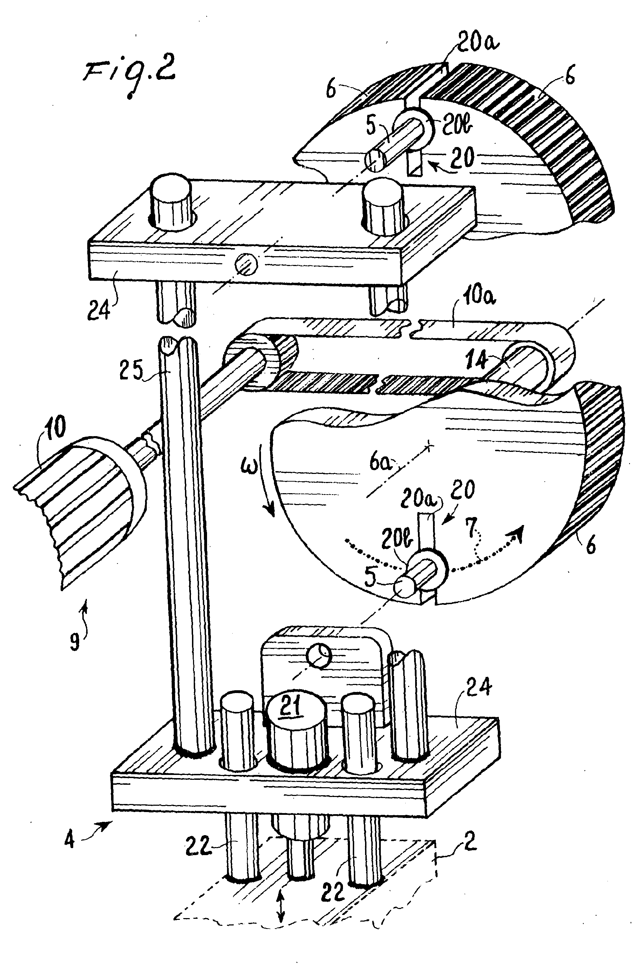

Figs. 1, 3, 4, 5, 6a, 6b, 6c, 6d, 14 show opposite work units 2 active on opposite faces of the laminar material, whereas Fig. 2 shows a single work unit.

In addition, device 1 in accordance with the invention is intended both for simultaneously acting on several work units 2 (in Figs. 1, 5, 6a, 6b, 6v, 6d, 14) and for acting on a single work unit 2 (in Figs. 2, 3, 4).

It is further pointed out that the work units 2 extend transversely of the movement direction of the laminar material 3 and that the same can be supported at their ends by identical devices 1, symmetrically placed at the edges of the laminar material 3. In the figures said devices 1 are shown at an edge alone of the laminar material 3, being understood that possible devices on the other edge, to engage both ends of the work units 2, are substantially identical with those shown.

At all events, device 1 provides that at least one work unit 2 be connected, through support means **4**, with a guide member **5** actuated by a rotating body **6**. The rotating body 6 is a crank, a wheel or others and has a rotation axis **6a** that is substantially parallel to the reference plane locally formed by the laminar material. In addition, the rotation axis **6a** is transverse to the sliding or reference speed $V_R$ of the material itself.

In the instances shown the rotating body 6 is always a wheel with a central rotation axis 6a perpendicular to the extension plane of the wheel itself.

The rotating body 6 has a rotation speed $\omega$ with respect to the rotation axis 6a the value of which will be better specified in the following.

The guide member 5 is in engagement with the rotating body 6 at an eccentric position relative to the rotation axis 6a and is movable along a circumferential trajectory **7**.

In the embodiments shown the guide member 5 is a pin eccentrically emerging from the wheel embodying the rotating body 6, in a direction perpendicular to the extension plane of said wheel. It is however apparent that the guide member 5 can be structured in different ways, it may be an articulated and rotatable fulcrum equipped with bearings, or also a mere seat or an attachment element set on the rotating body 6, or on the contrary a structure widely emerging from the rotating body 6.

At all events the guide member 5 is dragged along the circumferential trajectory 7 centered on the rotation axis 6a.

Along the whole circumferential trajectory 7, the guide member 5 has a tangential speed **T** that is perpendicular to the radius r joining the guide member 5 to the rotation axis 6a. The value of the tangential speed T depends on the angular speed $\omega$ and on radius **r**, based on the known formula $\mathbf{T = w\ r.}$

The tangential speed T can then be resolved into two components perpendicular to each other: a work component $\mathbf{T_L}$ parallel to the reference speed $V_R$ of the laminar material and a transverse component, locally perpendicular to the laminar material 3.

The work component $T_L$ is important because it denotes the motion of the guide member 5 in the same direction as that of the laminar material 3.

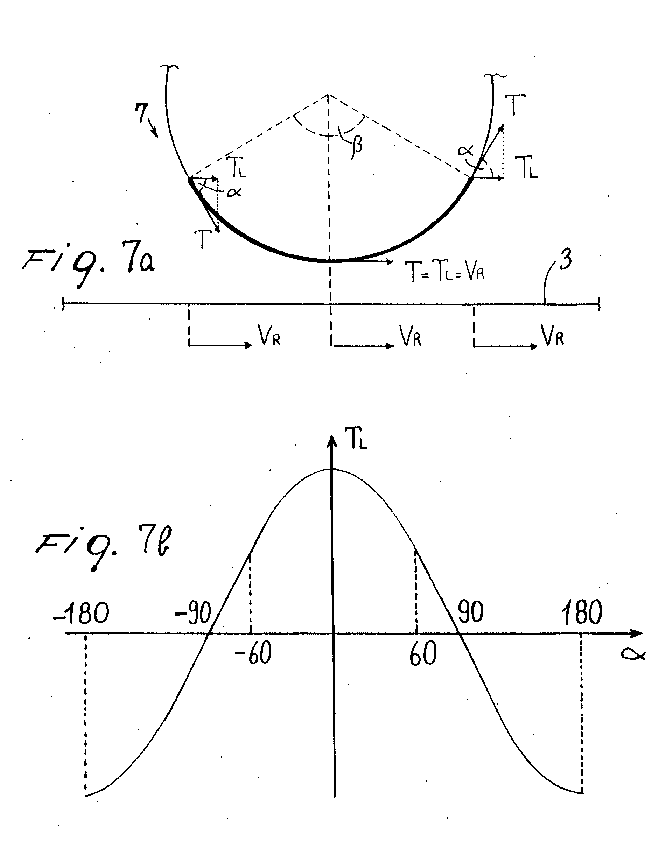

Figs. 7a, 7b show the value of the work component $T_L$ in the case of a constant rotation speed $\omega$.

In particular, Fig. 7a shows the work component $T_L$ in a portion of the circumferential trajectory 7 defining a work stretch **7a** of same. The work stretch 7a is shown as symmetric to a symmetry plane **8** passing through the rotation axis 6a and perpendicular to the laminar material 3, but the work stretch 7a can be freely selected as regards both position and width.

Preferably the work stretch 7a of the circumferential trajectory 7 passes through the symmetry plane 8 and has a length defining a central angle β - at the center of the circumferential trajectory 7 - larger than 20° and smaller than 180°, for example.

It is apparent that the work component $T_L$ forms a work angle α with the tangential speed T, which work angle gradually grows as the distance of the guide member or pin 5 from the symmetry plane 8 increases, and also that the work component gradually decreases with the distance itself from the symmetry plane 8, taking a value that can be clearly defined by the formula **$T_L = T \cos \alpha$.**

In Fig. 7a the tangential speed T is constant along the whole work stretch 7a and the value of T is selected to be the same as the value of the reference speed $V_R$ of the laminar material.

Thus the work component $T_L$ takes a value equal to T and to the reference speed $V_R$ at the symmetry plane 8.

The overall course of the work component $T_L$ in Fig. 7a is then denoted through Cartesian coordinates in Fig. 7b where on the ordinates there is the value of $T_L$ and on the abscissas the value of the work angle α.

It is apparent at all events that when ω and T are constant, the guide member or pin 5 moves along the work stretch 7a with a variable work component $T_L$.

If the central angle β is small, included between about 20° and 40° for example (and therefore the work stretch 7a extends in a very reduced manner at the sides of the symmetry plane 8) the work component $T_L$ varies to a minimum degree relative to the tangential speed T.

In this case, if the tangential speed T is equal to the reference speed $V_R$ of the laminar material, as already assumed, the contact between the work unit 2 and laminar material 3 does not create important deformations thereon.

A small central angle β and a short work stretch 7a are only possible if the laminar material moves forward slowly, thus in any case giving the work unit 2 the required time for operation, in spite of the reduced contact region.

When a substantial increase in the production rate is wished, the reference speed $V_R$ of the laminar material must be greatly increased and therefore contact between the work unit 2 and laminar material 3 must take place over a larger work stretch 7a, to give the work unit 2 the required time for operation.

Practically the work stretch 7a must define a relatively wide central angle β, included between about 60° and about 120° for example.

However, in this case, at the end portions of the work stretch 7a, the work component $T_L$ takes values that are much different from the tangential speed T and therefore from the reference speed $V_R$. Practically, the displacements of the guide member 5 become incompatible with those of the laminar material.

Under this situation of increased speed of the laminar material 3 drive means **9** adapted to selectively vary the tangential speed T of the guide member 5 along the work stretch 7a or the reference speed $V_R$ of the laminar material 3 are advantageously arranged to impose a work component $T_L$ and a reference speed $V_R$ equal to each other or with reduced differences that in any case fall within the tolerance limits.

In other words, the work component $T_L$ and reference speed $V_R$ are adjusted relative to each other point by point over the whole work stretch 7a.

In an embodiment of the invention the drive means 9 only intervenes on the rotating body 6 and imparts a continuously varying rotation speed ω to the same, so that the guide member 5 is given a work component $T_L$, point by point, that is substantially equal to the reference speed $V_R$ of the laminar material 3, over the whole work stretch 7a.

More specifically, if the reference speed $V_R$ is constant, the rotation speed ω is caused to vary instant by instant - at least over the work stretch 7a - in inverse proportion to the cosine of said work angle α.

In fact, if in the already mentioned formula $T_L = T \cos \alpha$, we set $T_L = V_R$ (and also taking into account the fact that T = w r) we obtain **$V_R = \omega\, r \cos \alpha$.**

If in the last-mentioned formula the rotation speed ω is highlighted, it appears:

$$\omega = V_R \tilde{\ } (r \cos \alpha).$$

Upon variation of the rotation speed w, the tangential speed T of the guide member 5 varies as well, in accordance with the formula

$$T = V_R \tilde{\ } \cos \alpha$$

that is obtained taking into account the fact that if T = ω r, ω can be replaced by T/r. The tangential speed T too, therefore, can be varied in inverse proportion to the cosine of the work angle α.

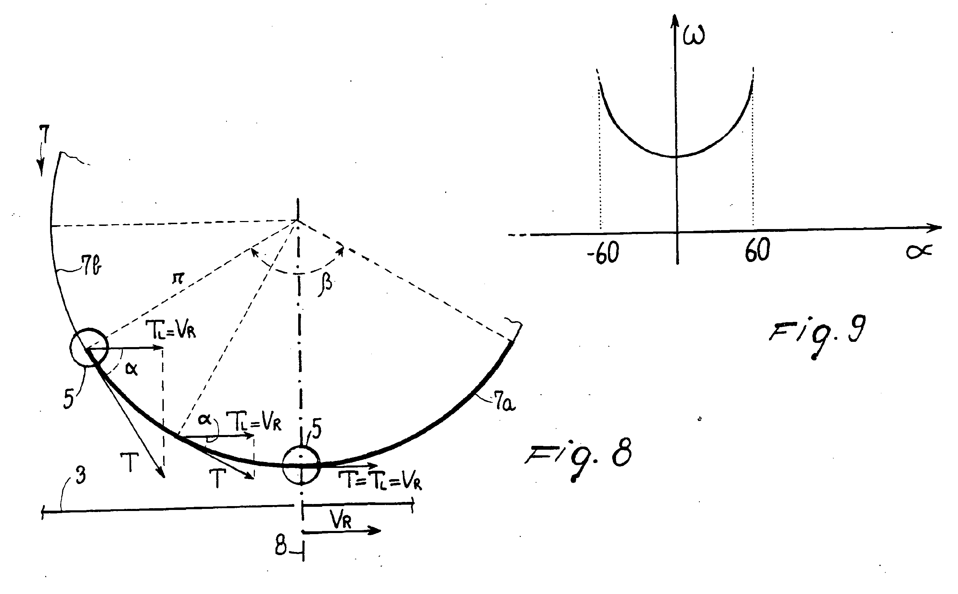

Fig. 8 shows the variations of T in the work stretch 7a when $T_L = V_R$.

The work stretch 7a is symmetric to the reference plane 8 and in addition it subtends a central angle β of 120° at the rotation axis 6a. Therefore the tangential speed T of the guide member or pin 5 varies between a minimum value at the symmetry plane 8 and a maximum value equal to twice said minimum value, at the ends of the work stretch 7a.

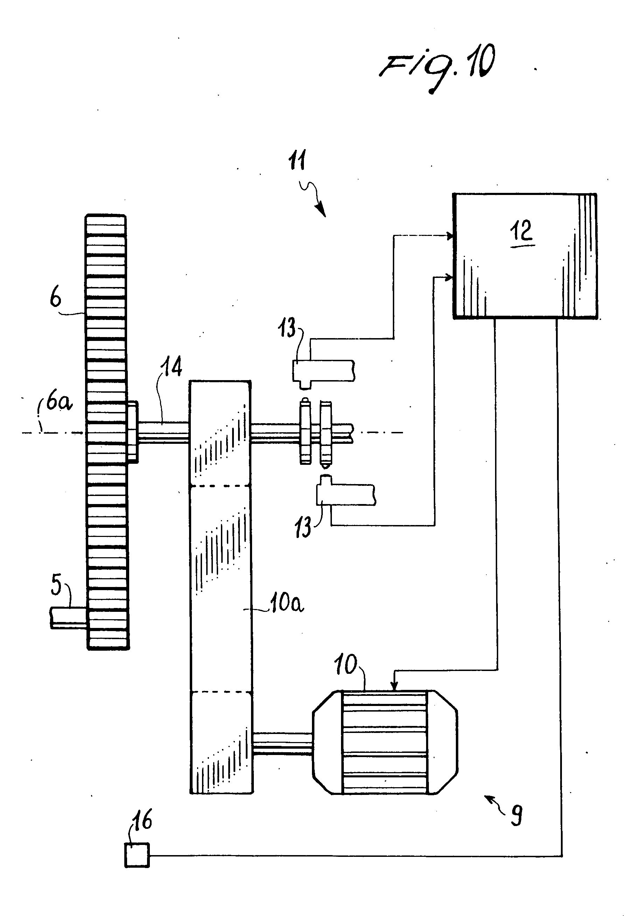

The values taken by the rotation speed ω in the work stretch 7a are represented through Cartesian coordinates in Fig. 9 wherein ω is on the ordinates and the work angle α is on the abscissas.

For varying the rotation speed of the rotating body 6 - and the tangential speed of the guide member or pin 5 - the drive means 9 is made up of at least one motor **10** and an adjusting apparatus **11** connected with motor 10.

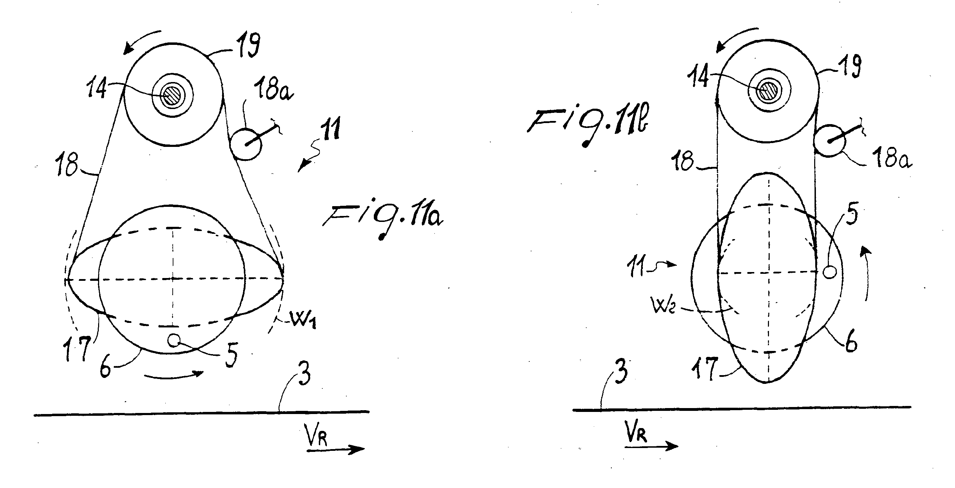

In the particular embodiment shown in Fig. 10, motor 10 is preferably a DC electric motor of the brushless type, capable of quickly and precisely varying its rotation speed. This electric motor is used for controlling rotation of CD-ROM and hard disks in computers, where a great accuracy and quick variations in the rotation speed are required.

As also shown in Fig. 10, the adjusting apparatus 11 comprises electronic devices **12** and sensors **13.**

The electronic devices 12 include circuits known by themselves and called SLM (Speed Loop Module) circuits used in the so-called "Full Digital" technology. Sensors 13, embodied by proximity sensors for example, detect the angular position of the rotating body 6 and can be disposed adjacent to any suitable point of the device, as diagrammatically shown in Fig. 1, or they may be preferably disposed adjacent to a small shaft or stem **14** coaxial with the rotation axis 6a to detect the angular position of tailpieces **15** positioned on the stem 14 itself.

Stem 14 is set in rotation by motor 10 through a belt **10a** or equivalent actuating means.

Further sensors **16** can be provided for detecting the reference speed $V_R$ of the laminar material 3. Said further sensors 16 are particularly useful when the device 1 is inserted in a machine initially made without the device itself in order to obtain an appropriate control of the operational features of said machine.

As well apparent in Fig. 8 for example, the circumferential trajectory 7 comprises a second stretch or return stretch **7b** different from the work stretch 7a and this return stretch 7b has a predominant length.

If the distances between two consecutive interventions are very reduced, when the device is put on a machine designed to obtain from the laminar material, bags of reduced length and tightly consecutive to each other, the electric motor 10 must increase its rotation speed to restore the work conditions as soon as possible.

In the embodiment shown in Figs. 11a and 11b it is still the rotation speed $\omega$ of the rotating body 6 that is continuously varied in the above specified manner to adapt the work component $T_L$, point by point, in the work stretch 7a, to a substantially constant reference speed $V_R$, but motor 10 can be a standard electric motor operating at a substantially constant rotation speed and the adjusting apparatus 11 is placed downstream of motor 10 and is interposed between the latter and the rotating body 6.

In this case the adjusting apparatus 11 comprises transmission members comprising kinematic non-circular elements adapted to convert a substantially constant rotation speed into a rotation speed at least partly variable in inverse proportion to the cosine of the work angle $\alpha$.

In particular, at least one shaped pulley **17** is provided which has a non-circular profile with respect to its rotation center **17a.**

The shaped pulley 17 is coaxially in engagement and rigidly connected with the rotating body 6.

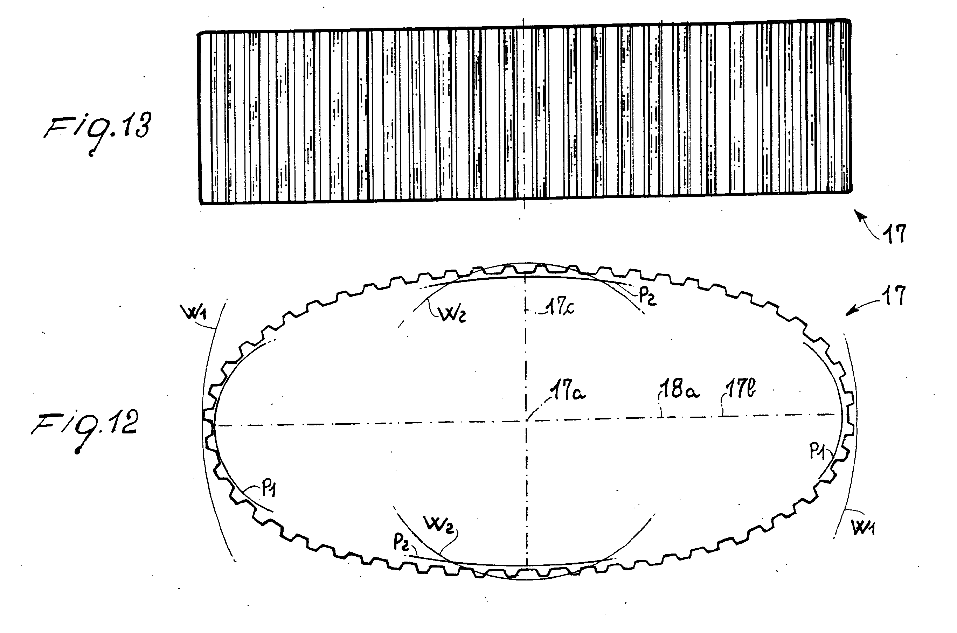

As shown in Fig. 12, the shaped pulley 17 is substantially elliptic and has a major symmetry axis **17b** and a minor symmetry axis **17c** that are orthogonal to each other and intersect at the rotation center 17a with the major axis 17b having a length that is substantially twice and even more the length of the minor axis 17c. For instance, the major symmetry axis 17b can have a length slightly longer than twenty centimeters, and the minor symmetry axis 17c a length of about ten centimeters. The arched outer profile of this shaped pulley 17 then gradually extends between first portions **P₁** having a radius of curvature of about five centimeters and placed at the ends of the major symmetry axis 17b, and second portions **P₂** having a radius of curvature of about thirty centimeters and placed at the ends of the minor symmetry axis 17c.

The same outer profile is engaged by a flexible connecting element preferably consisting of a toothed belt **18.** The shaped pulley 17 is therefore a toothed pulley.

The toothed belt 18 is wrapped on at least one auxiliary pulley **19** of the toothed type too and having a simple circular profile for example and a diameter similar to the length of the minor symmetry axis 17c of the shaped pulley 17.

The auxiliary pulley 19 is directly and coaxially connected with stem 14 driven by motor 10 or connected with motor 10 in a different manner.

Where necessary, at least one tightener **18a** can be inserted between the shaped pulley 17 and auxiliary pulley 19, to keep tensioning of the toothed belt 18 always constant.

It is pointed out that the transmission ratio between the two pulleys 17 and 19 varies continuously: depending on its position, the shaped pulley 17 appears like a big virtual wheel **W₁** of wide virtual diameter (Fig. 11a) or like a small virtual wheel **W₂** of reduced virtual diameter (Fig. 11b).

Upon increasing of this virtual diameter the rotation speed of the shaped pulley 17 decreases, together with the rotation speed of the rotating body 6 rigidly connected therewith. Vice versa, on decreasing of the diameter the rotation speed increases.

In said case involving an auxiliary pulley 19 with a diameter substantially equal to the minor symmetry axis 17c of the shaped pulley 17, the pulleys can establish with each other both a transmission ratio where the rotation speed of the shaped pulley 17 is lower than half the rotation speed of the auxiliary pulley 19 (Fig. 11a) and a transmission ratio one to one where equal rotation speeds exist (Fig. 11b). Practically, the combination involving the shaped pulley 17 and auxiliary pulley 19 ensures variations in the rotation speed $\omega$ of the

rotating body 6 between a minimum value, such set as to generate a tangential speed T of the guide member 5 equal to the reference speed $V_R$ of the laminar material, and a maximum value that is substantially twice and even more said minimum value. To obtain still wider variations in the rotation speed of the rotating body 6, starting from an electric motor 10 operating at a substantially constant rotation speed, the auxiliary pulley 19 too can have a non-circular profile relative to its rotation axis. In particular the profile of the auxiliary pulley 19 can be substantially elliptic too.

In more detail, the possible peripheral extension of an auxiliary pulley 19 that is elliptic as well is a submultiple of the peripheral extension of the shaped pulley 17, in such a manner that a given variation in the transmission ratio is periodically repeated at the work stretch 7a.

Even if an electric motor 10 operating at a substantially constant rotation speed and non-circular transmission members are used, it is possible to obtain easily modifiable operating situations.

For example, the overall work rate can be modified by suitably selecting the fixed value of the rotation speed of the electric motor and in addition the work component $T_L$ of the tangential speed T can be modified by varying the radius r of the circumferential trajectory 7.

In fact, the guide member 5 can be disposed and fixed to a suitable distance from the rotation axis 6a.

To this aim adjusting means **20** is provided that is adapted to fix the guide member or pin 5 to a radial position at will, on the rotating body 6.

The adjusting means 20 is diagrammatically shown in Fig. 2 as embodied by slits **20a** enabling a guide member 5 consisting of a pin conforming in size to said slits to be positioned and then fixed at will, by means of opposite washers **20b** for example.

It will be recognized that said transmission members with non-circular kinematic elements can be also used in combination with electronic devices 12 and sensors 13 adapted to vary the rotation speed of the electric motor 10.

In a further embodiment of the invention, the drive means 9 varies, point by point, the reference speed $V_R$ in such a manner as to adapt the same to the work component $T_L$ of the tangential speed T, selected on the basis of suitable convenience criteria.

In particular the rotating body 6 can be given a constant rotation speed $\omega$ and therefore the guide member 5 along the circumferential trajectory 7 can be given a constant tangential speed T.

In this case, as seen, the work component $T_L$ of the tangential speed T varies in the work stretch 7a in proportion to the cosine of said work angle $\alpha$. In fact the work component $T_L$ is defined by the formula **$T_L = T \cos \alpha$**. Practically, the work component $T_L$ is reduced at the ends of the work stretch 7a and is maximum at the symmetry plane 8.

For adapting the reference speed $V_R$ of the laminar material 3 to these variations in the work component $T_L$, said speed is caused to vary in proportion to the cosine of the work angle $\alpha$. In fact, if in said formula defining $T_L$, we set $V_R = T_L$ and $T = \omega r$, it is obtained:

$$V_R = T \cos \alpha \text{ and also } V_R = \omega r \cos \alpha$$

In order to vary the speed of the laminar material 3, the drive means 9 does not act on the rotation speed of the rotating members 6 for which specific drive elements **26** are provided, but it acts on actuating members **27** causing movement of the laminar material 3.

In the embodiment illustrated in Fig. 14 it is shown the choice of operating by varying the reference speed $V_R$ of the laminar material 3, in which figure the drive means 9 acts on actuating members 27 comprising calenders **28** disposed opposite in pairs, so as to drag along the laminar material 3 between them at varying speeds even instant by instant.

Shown in Fig. 14 is an electric motor 10 for each pair of calenders 28 but a single motor suitably linked to the calenders and the other devices may be provided. The speed $V_R$ of the laminar material is caused to vary in synchronism with the position and action of the work unit 2 and therefore the drive means 9 is provided with said sensors that, among other things, detect the position of the work bar 2. Irrespective of the choice of varying the rotation speed $\omega$ of the rotating body 6, point by point, or the sliding speed $V_R$ of the laminar material 3, the rotating body 6 and guide member 5 are not directly connected with the work unit 2: in fact the above mentioned support means 4 is provided between the guide member 5 and work unit 2.

The support means 4 is adapted to change, at the work stretch 7a, the circumferential trajectory or the trajectory in the form of an arc of a circumference of the guide member 5 to a trajectory of each work unit 2 that is linear and parallel to the laminar material 3, without altering the speeds imposed by the guide member 5 in a direction parallel to the laminar material 3. The support means 4 is further adapted to keep the angular lying of each work unit 2 relative to the laminar material 3 substantially constant.

In detail, the support means 4 comprises compensation devices **21** that in the embodiment shown in Figs. 1, 3, 4, 5, 6, 14 are defined by deformable elements in the form of springs, whereas in the embodiment shown in Fig. 2 are defined by deformable elements in the form of at least one fluid-operated cylinder.

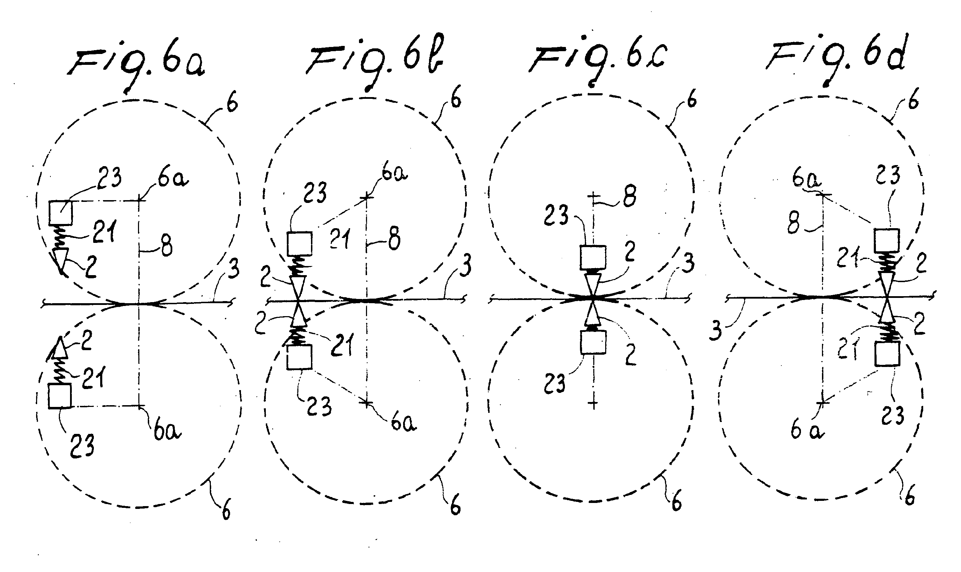

In both cases the compensation devices 21 are guided by gudgeons **22** and extend between the work units 2 and elements that are movable with the guide member 5. Said elements are defined in Figs. 1, 3, 4 by longitudinal members **23** spanning the laminar material 3, from edge to edge, and/or by crosspieces **24** - one for each edge of the laminar material 3 - as shown in Figs. 2 and 5.

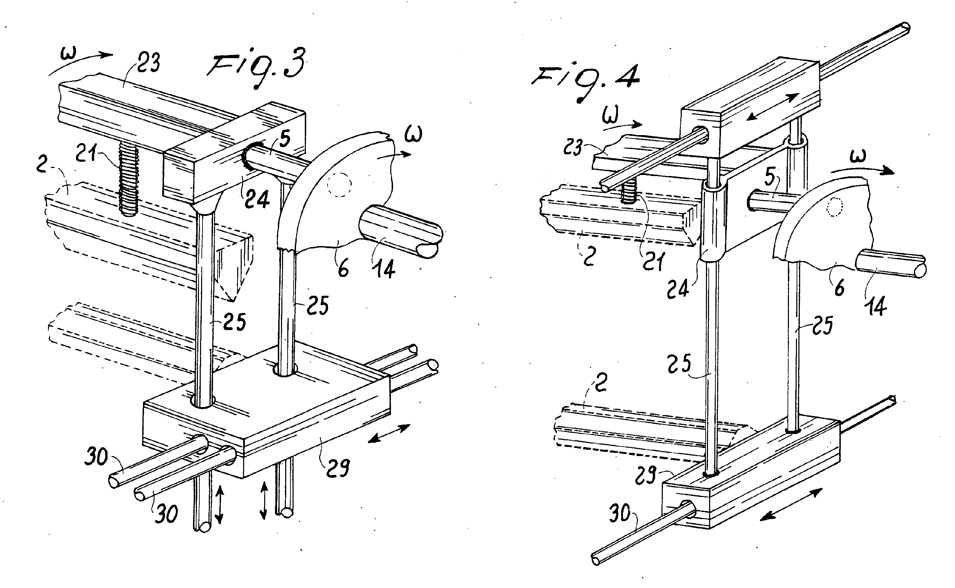

It is pointed out that the work units 2 extend transversely of the movement direction of the laminar material 3 and that they can be supported at the ends by identical devices 1, symmetrically disposed at the edges of the laminar material 3. The action of the compensation devices 21 is highlighted in Figs. 3a, 3b, 3c, 3d, where the same are represented by a spring and where two opposite work units 2 are shown that simultaneously act in a synergistic manner on opposite faces of the laminar material 3, upon command of the rotating bodies 6.

It is apparent that when a work unit 2 covers the work stretch 7a of its circumferential trajectory, it comes into contact with the laminar material 3 (Figs. 3b, 3c, 3d). Under this situation the different profiles of the work stretch 7a and the reference or lying plane of the laminar material 3 are compensated for by said spring enabling the respective work unit 2 to remain level with the laminar material.

The support means 4 further comprises, as said, a framework adapted to keep the angular lying arrangement of the work unit 2 with respect to the laminar material 3 substantially constant.

Practically said framework prevents the respective work bar 2 and the compensation devices 21 from overturning or changing their angular position with respect to the laminar material 3 both over the work stretch 7a and also over the whole circumferential trajectory 7 of the guide device or pin 5.

This allows the centrifugal forces, vibrations and tensioning in the device to be further reduced.

The framework can be made in different ways.

In Figs. 1 to 4 it is provided a framework or frame defined by said two crosspieces 24 that are substantially parallel to each other, at least one of which is movable together with the guide member 5, and by at least two column-shaped posts **25** extending between the crosspieces 24, perpendicular thereto. The column-shaped posts 25 slidably engage at least one of said crosspieces 24.

On the contrary, in Fig. 5 the crosspieces 24 themselves embody said framework and they have a great extension in length and take the aspect of tie-rods, so as to cause interlocking, on rotation, of a plurality of rotating bodies 6 disposed consecutively in a direction parallel to the reference speed $V_R$.

In more detail, in Fig. 1 said framework is inserted in a device having the rotating body 6 directly in engagement by meshing with a similar rotating body. The respective guide members 5 are vertically aligned with each other and offset through 180° and control respective opposite work units 2. To this aim the two rotating bodies rotate in opposite ways, as also shown in Figs. 6a to 6d.

The framework has two crosspieces 24, one for each guide member 5, and two column-shaped posts 25 fastened to the lower crosspiece 24 and slidable in the upper crosspiece 24.

In Fig. 2 the framework is inserted in a device in which two rotating bodies 6 are always provided, but the second rotating body is an auxiliary one and only designed to support one crosspiece 24 and posts 25, since there is only one work unit 2 in engagement with a single rotating body 6.

In this case the two rotating bodies can either directly mesh with each other or be spaced apart and connected by a belt or the like so as to rotate in the same way. Pins 5 can be 180° offset from each other or in the same position.

If two work units 2 active in opposite ways on the laminar material 3 are provided, in the case in Fig. 1 two devices 1 in accordance with the invention are provided, at the edges of the laminar material 3, whereas in the case in Fig. 2 four devices 1 in accordance with the invention are provided, one for each end of each work unit 2.

To simplify the structures, a crosspiece 24 can substantially define a carriage **29** constrained to carry out a linear movement.

Possibly, carriage 29 can be associated with a work unit 2 that therefore remains immediately adjacent to the laminar material 3 and that, upon the action of the column-shaped posts 25, linearly moves in synchronism with the other work unit 2, controlled by the guide member 5.

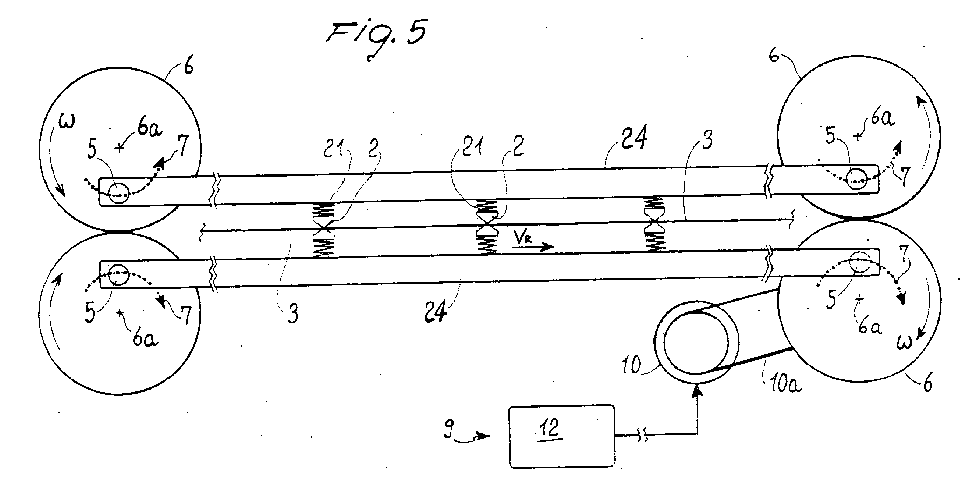

This technical solution is shown in Figs. 3 and 4.

In Fig. 3 the guide member 5 moves both an upper crosspiece 24 - connected with an upper work unit 2 - and the column-shaped posts 25, rigidly fixed to the upper crosspiece 24 and axially slidable in the second crosspiece defining a carriage 29. The latter is supported and guided in a direction parallel to the laminar material 3 by one or two guide bars **30**.

In Fig. 4 the guide member 5 still moves the upper crosspiece 24, but the latter is not rigidly fixed to the column-shaped posts 25. In fact the column-shaped posts 25 slidably pass through the upper crosspiece 24 and are rigidly connected to carriage 29 that is movable in a direction parallel to the laminar material 3 due to the presence of a guide bar 30. Possibly, as shown in the figure, an auxiliary carriage **31** may be provided that is also rigidly connected with the column-shaped posts and guided by at least one auxiliary bar **32** parallel to the guide bar 30.

Finally, in Fig. 5 the framework or frame stabilizing the position of the work units 2 is substantially defined, as already mentioned, by the crosspieces 24 alone, which have a great extension in length and take the aspect of tie-rods, so as to cause interlocking, on rotation, of a plurality of rotating bodies 6 disposed consecutive to each other in a direction parallel to the reference speed $V_R$.

Under this situation - if the guide members 5 of the consecutive rotating bodies 6 have identical circumferential trajectories 7 and are in the same position along the respective circumferential trajectories - crosspieces 24 keep always parallel to the laminar material 3.

This structure allow various work units to be disposed along the path of the laminar material 3, so as to simultaneously carry out in different regions of the laminar material 3, various successive working operations to gradually form many bags disposed consecutively.

The crosspieces 24 of Fig. 5 also allow transmission of motion between consecutive rotating bodies 6.

The above described device 1 puts into practice a guide process for a work unit 2. In accordance with this process at least one guide member 5 is provided to be moved along a circumferential trajectory 7 and the work unit 2 is provided to be connected thereto. This circumferential trajectory is selected to be adapted to cause the work unit to interfere with the laminar material 3 over at least one work stretch 7a thereof.

The guide member 5 along the circumferential trajectory 7 has a tangential speed T having a work component $T_L$ parallel to the reference speed $V_R$ of the laminar material 3.

In an embodiment of the process the tangential speed T of the guide member 5 is provided to be varied in a manner adapted to keep the work component $T_L$ substantially equal to the reference speed $V_R$.

In the case of a substantially constant reference speed $V_R$, the tangential speed T of the guide member 5 is varied in the work stretch 7a in inverse proportion to the cosine of the work angle $\alpha$ included between the tangential speed T and the work component $T_L$ thereof.

In a further embodiment of the process the tangential speed T of the guide member 5 is maintained substantially constant along the circumferential trajectory 7 and on the contrary it is the reference speed $V_R$ of the laminar material that is varied.

Said reference speed is varied in proportion to the cosine of the work angle $\alpha$, when the work unit 2 comes into contact with the laminar material 3 and the guide member 5 covers the work stretch 7a.

Practically, the laminar material is caused to move forward at an increasing speed when the guide member 5 covers the first half of the work stretch 7a and at a decreasing speed when it covers the second half.

If the work stretch 7a is of the type shown in Fig. 5, i.e. it is symmetric with respect to said symmetry plane 8, and in addition it subtends a central angle $\beta$ of 120°, the laminar material 3 doubles its speed in the first half and goes back to the starting speed in the second half.

In addition, preferably the work unit 2 is movably engaged with the guide member 5 in a manner adapted to vary the position of the work unit 2 downstream of the guide member 5 itself in the presence of stresses thereon. The invention achieves important advantages.

In fact the work unit 2 can operate in a very precise manner on a continuously moving laminar material 3 or ribbon.

In addition it is possible to arrange a wide contact region by varying the work stretch 7a, so that also relatively prolonged operations can be executed on the moving material, in particular heat-sealing.

Movement of the work unit 2 then can be very quick without this involving vibrations or too high stresses or work inaccuracies, and without requiring provision of special materials, since the guide member 5 follows a simple circumferential trajectory, devoid of discontinuity points and without motion reversals. This results in a high production rate and a substantial reduction in working rejections.

The work unit 2 then always keeps a correct position relative to the laminar material, by virtue of the presence of the support means 4.

The device can be applied in a particularly advantageous manner to bag-making machines, requiring high production rates and relatively prolonged interventions on the laminar material of which the bags are made.

Also eliminated in these machines are the accidental tears and local deformations on the bags at the heat-sealing regions, which tears and deformations result from stopping and restarting of the laminar material in the presence of an intermittent movement.

In the case of two work units defined by two opposite welding bars and acting in a synergistic manner on opposite faces of the laminar material, the two bars take a mutually opposite position with a gradual movement and a gradually increasing pressure, strong impacts being avoided.

It will be finally recognized that the device has an independent structure and therefore can be advantageously inserted in previously built machines devoid of the device itself.

**Claims**

1. A device for operating on a moving laminar material, in particular for a bag-making machine, said machine being of the type having at least one work unit (2) and actuating members (27) adapted to cause advancing of the laminar material (3) at a reference speed $V_R$, the device being **characterized in that** it comprises:

   - at least one rotating body (6) having a rotation axis (6a) and a rotation speed $\omega$,
   - at least one guide member (5) in engagement with said rotating body (6) at an eccentric position with respect to said rotation axis (6a) and movable along a circumferential trajectory (7) having a work stretch (7a),
   - said guide member (5) being connected with said work unit (2) and having, in said circumferential trajectory (7), a tangential speed T with a work component $T_L$ parallel to the laminar material (3),

- and drive means (9) designed to selectively vary said rotation speed $\omega$ and reference speed $V_R$ in a manner adapted to make said work component $T_L$

in said work stretch (7a) and said reference speed $V_R$ substantially equal to each other.

2. A device as claimed in Claim 1, wherein alternately said reference speed $V_R$ and rotation speed $\omega$ are substantially constant and wherein said drive means (9) is adapted to alternately impose a variable speed to said rotating body (6) and laminar material (3) which is correlated with the cosine of a work angle $\alpha$ included between said tangential speed T and work component $T_L$.

3. A device as claimed in Claim 2, wherein said reference speed $V_R$ of said laminar material (3) is substantially constant and wherein said drive means (9) is adapted to impose a rotation speed w to said rotating body (6) and a tangential speed T to said guide member (5) that are variable in inverse proportion to the cosine of said work angle $\alpha$.

4. A device as claimed in Claim 3, wherein a symmetry plane (8) is provided that is perpendicular to the laminar material (3) and passes through said rotation axis (6a) and wherein said work stretch (7a) extends at said symmetry plane (8) and transversely of same, and at said rotation axis (6a) it defines a central angle $\beta$ equal to or smaller than 120°, said guide member (5) having a tangential speed T included between a minimum value equal to that of the reference speed $V_R$, at said symmetry plane /8), and a maximum value equal to or smaller than twice said minimum value.

5. A device as claimed in Claim 2, wherein said rotation speed $\omega$ of said rotating body (6) is substantially constant and wherein said drive means (9) is active on said actuating members (27) of said laminar material (3) to impose a reference speed $V_R$ to said laminar material (3) that is variable in proportion to the cosine of said work angle $\alpha$.

6. A device as claimed in Claim 1, wherein said drive means (9) comprises at least one electric motor (10) , electronic devices (12) active on said electric motor (10) to vary the rotation speed of same, and sensors (13, 16) to detect at least the position of said guide member (5) along said circumferential trajectory (7), said electronic devices (12) being interlocked with said sensors (13, 16).

7. A device as claimed in Claim 6, wherein said electric motor (10) is a direct current brushless motor and wherein said electronic devices (12) comprise SLM or Speed Loop Module circuits.

8. A device as claimed in Claim 1, wherein said drive means (9) comprises at least one motor (10) and transmission members extending downstream of said motor (10), and wherein said transmission members comprise non-circular kinematic elements adapted to convert a substantially constant rotation speed of said motor (10) into a variable rotation speed.

9. A device as claimed in Claim 8, wherein said non-circular kinematic elements comprise at least one shaped pulley (17) having a major symmetry axis (17b) and a minor symmetry axis (17c) orthogonal to each other and substantially defining virtual diameters of virtual wheels ($W_1$, $W_2$), a rotation center (17a) of said shaped pulley (17) being provided at the intersection of said major and minor symmetry axes (17b, 17c).

10. A device as claimed in Claim 1, wherein means (20) for adjusting the position of said guide member (5) relative to said rotation axis (6a) is provided, in order to select the diameter of said circumferential trajectory (7).

11. A device as claimed in Claim 1, wherein support means (4) interposed between the work unit (2) and said guide member (5) is provided, which comprises deformable compensation devices (21) adapted to allow position variations of the work unit (2) in a direction perpendicular to the laminar material (3) in the presence of stresses in a direction perpendicular to the laminar material (3).

12. A device as claimed in Claim 1, wherein support means (4) interposed between the work unit (2) and said guide member (5) is provided, which comprises at least one framework adapted to keep the angular lying arrangement of the work unit (2) substantially constant with respect to the laminar material (3).

13. A device as claimed in Claim 12, wherein said framework comprises a frame having two crosspieces (24) that are substantially parallel to each other, at least one of said crosspieces (24) being movable together with one said guide member (5), and at least two column-shaped posts (25) extending between said crosspieces (24) at right angles thereto, said column-shaped posts (25) slidably engaging at least one of said crosspieces (24).

14. A device as claimed in Claim 13, wherein one said crosspiece (24) is movable together with one said guide member (6) and a second crosspiece embodies a carriage (29) constrained to carry out a linear movement and driven by said column-shaped posts (25).

**15.** A device as claimed in Claim 12, wherein a plurality of said rotating bodies (6) is provided and they are disposed consecutive to each other in a direction parallel to said reference speed $V_R$, and wherein said framework comprises at least one crosspiece (24) extending like a tie-rod and adapted to interlock said rotating bodies (6) with each other on rotation.

**16.** A process for operating on a moving laminar material, in particular for a bag-making machine, said machine being of the type having at least one work unit and actuating members adapted to cause advancing of the laminar material at a reference speed, the process being **characterized in that** it consists: in moving at least one guide member connected with said work unit in a circumferential trajectory, said guide member having, along said circumferential trajectory, a tangential speed with a work component parallel to said reference speed; and in selectively varying said tangential speed of said guide member and said reference speed of said laminar material in a manner adapted to keep said work component substantially equal to said reference speed at a work stretch of said circumferential trajectory.

**17.** A process as claimed in Claim 16, wherein said reference speed is maintained substantially constant and wherein said tangential speed of said guide member is varied in inverse proportion to the cosine of a work angle $\alpha$ included between said tangential speed and said work component.

**18.** A process as claimed in Claim 16, wherein said tangential speed is maintained substantially constant and wherein said reference speed of said laminar material is varied in proportion to the cosine of a work angle $\alpha$ included between said tangential speed and said work component.

Fig.1

Fig.2

Fig.4

Fig.3

Fig. 5

Fig. 6a    Fig. 6b    Fig. 6c    Fig. 6d

EP 1 433 707 A2

Fig. 7a

$$T = T_L = V_R$$

Fig. 7b

Fig. 9

Fig. 8

Fig.10

Fig.11a

Fig.11b

Fig.13

Fig.12

EP 1 433 707 A2

Fig.14